(19) Europäisches Patentamt / European Patent Office / Office européen des brevets

(11) EP 2 176 918 B1

## (12) EUROPEAN PATENT SPECIFICATION

(45) Date of publication and mention
of the grant of the patent:
**25.03.2015 Bulletin 2015/13**

(21) Application number: **08845590.2**

(22) Date of filing: **21.10.2008**

(51) Int Cl.:
*H01M 10/0525* (2010.01)   *H01M 10/0567* (2010.01)
*H01M 10/058* (2010.01)   *H01M 4/131* (2010.01)
*H01M 4/133* (2010.01)   *H01M 10/0568* (2010.01)

(86) International application number:
**PCT/CN2008/072765**

(87) International publication number:
**WO 2009/056032 (07.05.2009 Gazette 2009/19)**

### (54) A METHOD FOR PREPARING LITHIUM-ION RECHARGEABLE BATTERIES

VERFAHREN ZUR HERSTELLUNG WIEDERAUFLADBARER LITHIUM-IONEN-BATTERIEN

PROCÉDÉ DE PRÉPARATION DE BATTERIES AU LITHIUM-ION RECHARGEABLES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.10.2007 CN 200710165372**

(43) Date of publication of application:
**21.04.2010 Bulletin 2010/16**

(73) Proprietor: **Byd Company Limited
Guangdong 518118 (CN)**

(72) Inventors:
• **FAN, Yiwei**
**Guangdong 518118 (CN)**

• **WANG, Kai**
**Guangdong 518118 (CN)**
• **LEI, Lei**
**Guangdong 518118 (CN)**
• **ZENG, Cheng**
**Guangdong 518118 (CN)**

(74) Representative: **Hoffmann Eitle
Patent- und Rechtsanwälte PartmbB
Arabellastraße 30
81925 München (DE)**

(56) References cited:
**CN-A- 1 787 275      CN-A- 1 964 125
JP-A- 2005 203 120      JP-A- 2007 207 650
US-A1- 2007 065 726**

**Description**

FIELD OF THE INVENTION

The present invention relates to a method for preparing lithium-ion rechargeable batteries.

BACKGROUND OF THE INVENTION

As lithium ion rechargeable battery industry continues to grow, there has been ever increasing demand for better battery performance. The performance of a lithium battery is reflected in its capacity, storage property at high temperatures, discharge performance at low temperatures, discharge rate and cycle property. Factors affecting battery performance include the electrode material, battery preparation process and electrolyte solution. Therefore, there has been ever increasing demand for performance of the electrolyte solution which is a main part of the battery. In recent years, lithium bis(oxalate)borate (LiBOB) has been used as a new additive used in the electrolyte solution, and can improve battery performance at high temperature and the cycle life.

The patent application US2005026044 discloses a battery electrolyte solution containing LiBOB in $\gamma$-butyrol-actone and low viscosity solvent. Batteries using this electrolyte solution have high electrical conductivity and discharge capacity.

Japanese application JP2006040896 discloses a lithium battery which can be used at relatively high temperature of 80-180°C. Said battery comprises a positive electrode, an negative electrode comprising either $Li_4Ti_5O_{12}$ or a carbon-containing material capable of inserting lithium, a separator, a non-aqueous solvent, and a lithium salt, wherein the active material of said positive electrode is a lithiated metal oxide having the following formula: $LiNi_{1-x-y}Co_xAl/Mn_yO_2$, in which Al/Mn means Al and/or Mn; $0 \leq x \leq 0.5$; $0 \leq y \leq 0.5$; the sum x+y being less than 0.66; and wherein the lithium salt is selected from the group consisting of $LiPF_6$, $LiBF_4$, LiBOB, LiBETI, and mixtures thereof.

The above mentioned prior technique using the additive LiBOB, however, has its shortcomings. Firstly, there is an increase of irreversible capacity during the initial charge-discharge cycle. Secondly, the low-temperature discharge capacity decreases. Thirdly, the battery discharge rate decreases. Therefore, the lithium-ion rechargeable batteries using the additive LiBOB in above mentioned prior technique have worse performance.

JP 2007-207650 (A) describes a manufacturing method of a lithium secondary battery, wherein the battery is filled with a first part of an electrolyte, which is free of $LiN(SO_2CF_3)_2$ and/or $LiC(SO_2CF_3)_3$, subjecting the battery to a charge cycle and then filling it with a second part of the electrolyte, which contains $LiN(SO_2CF_3)_2$ and/or $LiC(SO_2CF_3)_3$. Thus, the corroding effect of $LiN(SO_2CF_3)_2$ and/or $LiC(SO_2CF_3)_3$, on the aluminum contacts of the electrodes can be prevented.

SUMMARY OF THE INVENTION

An object of the present invention is to overcome the disadvantages of the battery in the above mentioned prior technique having worse performance, and to provide a method for preparing lithium-ion rechargeable battery having better performance.

The present invention provides a method for preparing lithium-ion rechargeable batteries, comprising:

placing an electrode assembly into a battery case and injecting electrolyte solution into the case; and
sealing the battery case;
wherein the injection of the electrolyte solution comprises twice electrolyte solution injection which includes a first injection injecting part of the electrolyte solution into the battery case, and then temporarily sealing the case followed by a formation process of the resulted temporarily sealed battery, forming a solid electrolyte interphase (SEI) membrane; and a second injection injecting the mixture obtained by adding an additive into the remaining electrolyte solution into the battery case,
wherein said additive is lithium bis(oxalate)borate.

According to the method for preparing the lithium-ion rechargeable battery provided by the present invention, the injection of the electrolyte solution into the battery case is carried out in two injection steps. In the first injection, solid electrolyte interphase (SEI) membrane formed in the formation process is not affected by additive LiBOB due to no addition of additive LiBOB into the electrolyte solution, thereby reducing a loss of the irreversible capacity during the initial charge-discharge cycle, decreases of low-temperature discharge capacity and battery discharge rate. In the second injection, adding LiBOB into the remaining electrolyte solution can ensure storage property at high temperatures and cycle property of the battery improved.

BRIEF DESCRIPTION OF THE DRAWINGS

Figure 1 illustrates the curve of the thickness change, measured at room temperature, at the middle of the batteries prepared in Examples 1-3 and Comparison examples 1-2 during the repeated charge-discharge cycles.
Figure 2 illustrates the curve of the thickness change, measured at a temperature of 45°C, at the middle of the batteries prepared in Examples 1-3 and Comparison examples 1-2 during the repeated charge/discharge cycles.

DETAILED DESCRIPTION OF THE PREFERRED EMBODIMENTS

This invention describes a method for preparing lithium-ion rechargeable batteries. The method includes placing an electrodes assembly into a battery case and injecting electrolyte solution into the case and sealing the battery case. The injection of the electrolyte solution comprises twice electrolyte solution injection. In the first injection, part of the electrolyte solution is injected into the battery case and the case is then temporarily sealed followed by a formation process of the resulted temporarily sealed battery. In the second injection, an additive is added into the remaining electrolyte solution and the resulting mixture is then injected into the battery case. Said additive is lithium bis(oxalate)borate.

This method prevents the solid electrolyte interphase (SEI) from thickening due to the no addition of the additives such as LiBOB into the electrolyte solution during the battery formation process in the first injection step, and results in a better battery performance. The LiBOB-induced thickening of the SEI membrane leads to a loss of the irreversible capacity during the initial charge-discharge cycle, a decrease of low-temperature discharge capacity and battery discharge rate. Without LiBOB during the first injection of electrolyte solution, the formation of the SEI membrane is not affected by LiBOB and prevents the LiBOB-induced thickening of SEI. After the formation process, in the second injection, the LiBOB is added into the electrolyte solution to improve the storage property at high temperatures and cycle property of the battery due to the characteristics of LiBOB. Therefore, the electric performances of the battery are improved according to the method provided by present invention.

According to the preparation method provided by the present invention, it is appropriated that the amount of electrolyte solution used in the first injection is sufficient to form the SEI membrane. Preferably, the amount is 40-90wt% of the total weight of the electrolyte solution, while the second injection uses 10-60wt% of the total weight of the electrolyte solution. More preferably, the first injection uses 50-70wt% of the total weight of the electrolyte solution while the second 30-50wt%.

According to the preparation method provided by the present invention, the method for implementing the formation process is known to a person ordinary skilled in the art. For example, the formation process may involve charging the temporarily sealed battery using 55-220 mA current for 6-10 hours so that the voltage of the battery reaches 3.5-4.0 Volts. The purpose of the formation process is to form steady and dense SEI membrane.

According to the preparation method provided by the present invention, the amount of additives used in the electrolyte solution can be that well known in this art, such as ranging from 0.1 to 3.0wt% of the total weight of the electrolyte solution. Said total weight of the electrolyte solution here does not involve the weight of the additive.

According to the preparation method provided by the present invention, the electrolyte solution used in the present invention may be various electrolyte solutions well known in the art. For example, the electrolyte used in the electrolyte solution may be one or more selected from the group consisting of lithium hexafluorophosphate ($LiPF_6$), lithium perchlorate ($LiClO_4$), lithium tetrafluoroborate ($LiBF_4$), lithium hexafluoroarsenate ($LiAsF_6$), lithium hexafluorosilicate ($LiSiF_6$), lithium tetraphenylborate ($LiB(C_6H_5)_4$), lithium chloride (LiCl), lithium bromide (LiBr), lithium aluminum tetrachloride ($LiAlCl_4$), lithium tri(trifluoromethylsulfonyl)methene ($LiC(CF_3SO_2)_3$), lithium trifluoromethylsulfonate ($LiCF_3SO_3$), and lithium bis(trifluoromethylsulfonyl)imide ($LiN(CF_3SO_2)_2$). The solvent used in the electrolyte solution can be one or more selected from the group consisting of ethylene carbonate (EC), diethyl carbonate (DEC), dimethyl carbonate (DMC), methyl ethyl carbonate (EMC), propylene carbonate (PC), methyl formate (MF), methyl acrylate (MA), methyl butyrate (MB), ethyl acetate (EA), ethylene sulfite (ES), propylene sulfite (PS), dimethyl sulfide (DMS), diethyl sulfite (DES), and tetrahydrofuran.

According to the preparation method provided by the present invention, the concentration of electrolyte in the electrolyte solution is 0.1-2 mol/L, with the preferable concentration being 0.8-1.2 mol/L.

The present invention will be described in further detail by way of examples as below.

Example 1.

1. Positive electrode Preparation

Dissolve 60g of poly(vinylidene difluoride) (PVDF) in 2000g of N-methylpyrrolidone (NMP) to obtain the adhesive solution. Uniformly mix 1900g of lithium cobaltate ($LiCoO_2$) and 40g of acetylene black powder. Add the resulting mixture into the adhesive solution and evenly mixing to obtain the positive electrode slurry. Evenly coat the positive electrode slurry on both sides of an aluminum foil Heat the coated foil to 150 °C in vacuum for one hour, roll and cut the foil into 485mm×44mm×125μm positive electrodes, each containing approximately 8g of $LiCoO_2$.

2. Negative electrode Preparation

Mix 950g of graphite, 20g of carbon fiber and 30g of styrene-butadiene rubber (SBR). Add 1,500 ml of water into the resulting mixture and mix thoroughly it to obtain the negative electrode slurry. Evenly coat both sides of a copper foil with the negative electrode slurry. After heating in vacuum at 125 °C for one hour, roll and cut the foil into negative electrodes with the dimensions of 500mm×45mm×130μm, each containing 4g of graphite.

3. Battery Assembly

Wrap the above positive electrode and negative electrode with 20-micron thick polypropylene/polyethylene/polypropylene three-layer composite seperator into a square-shaped electrode assembly. Place the electrode assembly into a 5×34×50mm square-shaped aluminum battery case.
Make the electrolyte solution by dissolving $LiPF_6$ at 1 mol/L concentration in a solvent consisted of ethylene carbonate (EC), diethyl carbonate (DEC) and a methyl ethyl carbonate (EMC) in a mass ratio of 1:1:1.
In an argon environment, inject 2.2g of the resulted electrolyte solution into the battery case with the electrode assembly as the first injection of the electrolyte solution. Seal the injection hole on the case temporarily with a rubber pad and then charge the battery with 110 mA current for 8 hours for the formation process. The battery voltage after the formation should be around 3.5-4.0 V.
Add 0.044g of LiBOB into 1.256g of the electrolyte solution. Unseal the battery case by removing the rubber pad and inject the LiBOB-containing electrolyte solution into the case as the second injection of the electrolyte solution. Seal the case permanently to obtain LP053450 type lithium-ion rechargeable battery. The battery's design capacity is 1100 mAh.

Example 2

Prepare a lithium-ion rechargeable battery according to the method described in Example 1, except that 1.75g of the electrolyte solution was injected for the first injection and that 1.7465g of electrolyte solution with 0.0035g of LiBOB is injected for the second injection.

Example 3

Prepare a lithium-ion rechargeable battery according to the method described in Example 1, except that 2.45g of the electrolyte solution was injected for the first injection and that 0.95g of electrolyte solution with 0.1g of LiBOB is injected for the second injection.

Comparison example 1

Prepare a lithium-ion rechargeable battery according to the method described in Example 1, except that no LiBOB is added for the second injection of the electrolyte solution.

Comparison example 2

Prepare a lithium-ion rechargeable battery according to the method described in Example 1, except that LiBOB is added into the electrolyte solution for the first injection instead of for the second injection.

Performance Test

1. Battery Capacity Test

Prepare 5 batteries according to the method described in Example 1-3 and Comparison example 1-2. Measure the battery capacity of the 5 batteries using a BS-9300 (R) rechargeable battery testing device at room temperature and with relative humidity of 25-85%. Charge the batteries to 4.2V using the constant current 1C and then to 0.05C using the constant voltage 4.2 V. Discharge the batteries to 3.1V using the constant current 1C. The test data for the 5 batteries are listed in Table 1 below.

Table 1. Battery Capacity Measurement

| | Capacity 1 (mAh) | Capacity 2 (mAh) | Capacity 3 (mAh) | Capacity 4 (mAh) | Capacity 5 (mAh) | Average (mAh) |
|---|---|---|---|---|---|---|
| Ex. 1 | 1095 | 1098 | 1092 | 1099 | 1103 | 1097.4 |
| Ex. 2 | 1098 | 1101 | 1095 | 1103 | 1091 | 1097.6 |
| Ex. 3 | 1093 | 1095 | 1099 | 1090 | 1095 | 1094.4 |
| Co. Ex. 1 | 1092 | 1011 | 1089 | 1098 | 1104 | 1097.8 |
| Co. Ex. 2 | 1062 | 1059 | 1067 | 1055 | 1063 | 1061.2 |

2. High-Temperature Storage Test

Firstly, measure the initial capacity and initial thickness of the batteries made by the methods described in Examples 1-3 and Comparison Examples 1-2 at room temperature. Then charge the batteries to 4.2 V using the current 1C then to 0.05C using the voltage 4.2V, and store the charged batteries at 85 °C in a temperature and humidity-controlled box for 48 hours. Afterwards, place the batteries at room temperature for two hours before measuring their thickness and resistance. Subsequently, discharge the batteries using 1C to 3.1V and measure their discharge capacity. The test data of high-temperature storage property are shown in Table 2.

Table 2. High-Temperature Storage

| | Initial Capacity (mAh) | Initial Thickness (mm) | Thickness after Storage (mm) | Capacity after Storage (mAh) | Resistance Increase (%) | Capacity Recovery (%) | Thickness Increase (%) |
|---|---|---|---|---|---|---|---|
| Ex. 1 | 1095 | 5.56 | 5.87 | 971.4 | 12.05 | 5.58 | 5.58 |
| Ex. 2 | 1097 | 5.53 | 5.94 | 935.3 | 14.31 | 7.41 | 7.41 |
| Ex. 3 | 1093 | 5.57 | 5.92 | 970.9 | 10.57 | 6.28 | 12.45 |
| Co. Ex.1 | 1103 | 5.54 | 6.23 | 882.2 | 18.55 | 12.45 | 9.53 |
| Co. Ex.2 | 1064 | 5.56 | 5.99 | 918.4 | 11.74 | 7.73 | 5.58 |

3. Low-Temperature Discharge Property Test

Charge the batteries made by the methods described in Example 1-3 and Comparison example 1-2 in the room temperature to 4.2V using the constant current 1C and then to 0.05C using the constant voltage 4.2V. Place the charged batteries at -10 °C in a temperature and humidity-controlled box for 90 minutes. Discharge the battery using current 1C to 2.75 V and record the respective discharge capacity. Again Charge the battery in room temperature to 4.2 V using the constant current 1C and then to 0.05C using the constant voltage 4.2, subsequently place the battery in constant-temperature and constant-humidity box at -20 °C for 90 minutes. Again discharge the battery using current 1C to 2.75 V and measure the respective discharge capacity. Table 3 below shows the data of this test.

Table 3. Low-Temperature Discharge Capacity

|  | -10°C | | -20°C | |
|---|---|---|---|---|
|  | Capacity@1C (mAh) | Capacity@0.2C (mAh) | Capacity@1C (mAh) | Capacity@0.2C (mAh) |
| Ex. 1 | 632 | 1039 | 159 | 918 |
| Ex. 2 | 606 | 1024 | 135 | 914 |
| Ex. 3 | 636 | 1036 | 145 | 921 |
| Co. Ex. 1 | 644 | 1045 | 171 | 925 |
| Co. Ex. 2 | 482 | 1005 | 76 | 648 |

4. The Discharge Rate Test

This test is also conducted on batteries made by the methods described in Example 1-3 and Comparison example 1-2, using a BS-9300 (R) rechargeable battery testing device at room temperature and with relative humidity of 25-85%. Firstly, charge the battery using current 1C to 4.2 V then using voltage 4.2V to 0.05C, and discharge the battery with current 0.2C to 3.1 V; subsequently charge the battery using current 1C to 4.2 V then using voltage 4.2V to 0.05, and discharge the battery with current 0.5C to 3.1 V. Repeat the test using discharge current 1C, 2C, 3C, respectively. Record the discharge capacity. And record the discharge capacity in different discharge current, and then calculate the discharge rates by using the following formula:

$$\text{Discharge Rate} = \text{Discharge Capacity in different discharge current} / \text{discharge capacity in discharge current } 0.2C \times 100\%.$$

The results of discharge capacity and discharge rates are shown in Table 4 below.

Table 4. The Discharge Capacity And Discharge Rate

|  | Discharge Capacity (mAh) | | | | | Discharge Rate (%) | | | |
|---|---|---|---|---|---|---|---|---|---|
|  | 0.2C | 0.5C | 1C | 2C | 3C | 0.5C/0.2C | 1C/0.2C | 2C/0.2C | 3C/0.2C |
| Ex. 1 | 1140.2 | 1122.5 | 1098.0 | 1047.5 | 935.7 | 98.45 | 97.82 | 95.40 | 89.33 |
| Ex. 2 | 1136.0 | 1091.8 | 1070.9 | 1011.1 | 891.8 | 96.10 | 98.09 | 94.41 | 88.21 |
| Ex. 3 | 1134.2 | 1098.5 | 1085.1 | 1039.3 | 923.7 | 96.34 | 96.67 | 94.65 | 88.19 |
| Co. Ex. 1 | 1138.1 | 1120.1 | 1086.6 | 1053.7 | 932.4 | 98.43 | 97.01 | 96.97 | 88.49 |
| Co. Ex. 2 | 1097.8 | 1047.4 | 983.0 | 908.9 | 772.4 | 95.41 | 93.85 | 92.46 | 84.99 |

5. The Cycle Property Test

This test is also conducted using a BS-9300 (R) rechargeable battery testing device at room temperature and at a temperature of 45 °C, respectively, and with a relative humidity of 25-85%. The batteries made by the methods described in Example 1-3 and Comparison example 1-2 is charged using current 1C to 4.2 V then using voltage 4.2V to 0.05C, and discharged using the current 1C to 3.1 V. A computer records the capacity at each charge/discharge cycle, and manually measure battery thickness every 50 cycles. Calculate the cycle discharge capacity retaining rate by using the following formula:

$$\text{Capacity Retaining Rate} = \text{Discharge Capacity} / \text{Initial Capacity} \times 100\%.$$

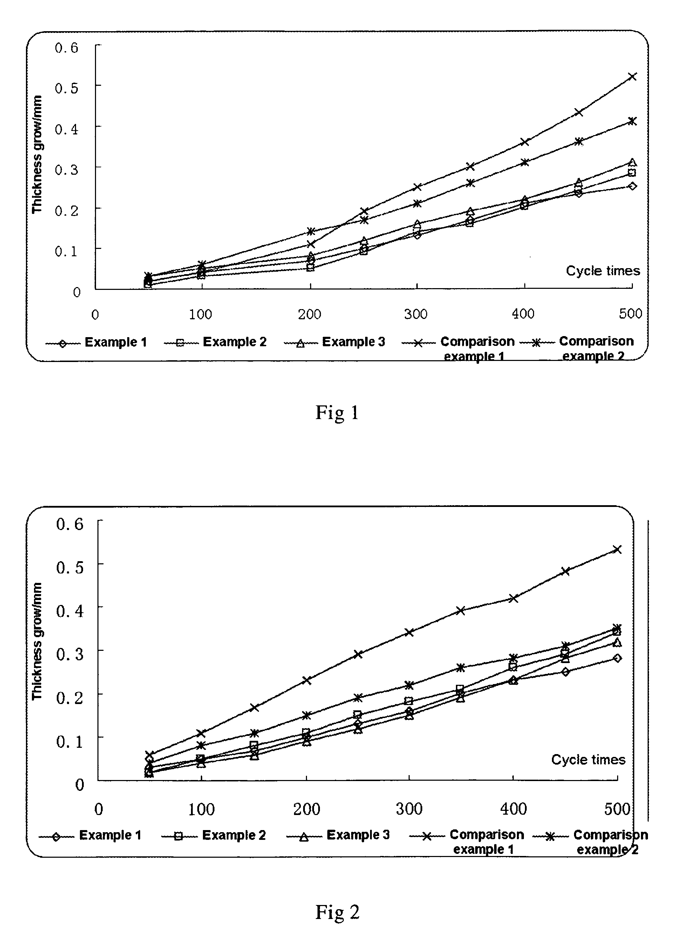

Table 5 shows the results of cycle discharge capacity retaining rate at room temperature, and table 6 shows the results of cycle discharge capacity retaining rate at the temperature of 45°C. Figs. 1 and 2 show the thickness swelling at the middle of the batteries at room temperature and at 45 °C during the charge-discharge cycle.

Table 5. Cycle Capacity Test at Room Temperature

| Cycle No. | 1 | 5 | 10 | 50 | 100 | 150 | 200 | 250 | 300 | 350 | 400 | 450 | 500 |
|---|---|---|---|---|---|---|---|---|---|---|---|---|---|
| Ex. 1 | 1.0000 | 0.9961 | 0.9857 | 0.9769 | 0.9482 | 0.9277 | 0.9233 | 0.8947 | 0.8854 | 0.8828 | 0.8747 | 0.8710 | 0.8502 |
| Ex. 2 | 1.0000 | 0.9922 | 0.9888 | 0.9800 | 0.9431 | 0.9263 | 0.9184 | 0.8800 | 0.8744 | 0.8670 | 0.8551 | 0.8455 | 0.8317 |
| Ex. 3 | 1.0000 | 0.9937 | 0.9845 | 0.9772 | 0.9408 | 0.9239 | 0.9176 | 0.8869 | 0.8785 | 0.8721 | 0.8634 | 0.8594 | 0.8468 |
| Co. Ex. 1 | 1.0000 | 0.9989 | 0.9883 | 0.9703 | 0.9098 | 0.8826 | 0.8686 | 0.8358 | 0.8072 | 0.7862 | 0.7643 | 0.7557 | 0.7320 |
| Co. Ex. 2 | 1.0000 | 0.9904 | 0.9874 | 0.9825 | 0.9307 | 0.9165 | 0.9062 | 0.8881 | 0.8764 | 0.8596 | 0.8508 | 0.8447 | 0.8397 |

Table 6. Cycle Capacity Test at 45 °C

| Cycle No. | 1 | 5 | 10 | 50 | 100 | 150 | 200 | 250 | 300 | 350 | 400 | 450 | 500 |
|---|---|---|---|---|---|---|---|---|---|---|---|---|---|
| Ex. 1 | 1.0000 | 0.9971 | 0.9896 | 0.9627 | 0.9415 | 0.9382 | 0.9174 | 0.9048 | 0.8973 | 0.8871 | 0.8801 | 0.8704 | 0.8658 |
| Ex. 2 | 1.0000 | 0.9956 | 0.9896 | 0.9634 | 0.9434 | 0.9308 | 0.9162 | 0.9024 | 0.8854 | 0.8787 | 0.8602 | 0.8469 | 0.8311 |
| Ex. 3 | 1.0000 | 0.9967 | 0.9873 | 0.9642 | 0.9426 | 0.9355 | 0.9158 | 0.9021 | 0.8903 | 0.8815 | 0.8699 | 0.8532 | 0.8376 |
| Co. Ex. 1 | 1.0000 | 0.9972 | 0.9806 | 0.9580 | 0.9474 | 0.9219 | 0.8995 | 0.8809 | 0.8569 | 0.8345 | 0.8126 | 0.7946 | 0.7717 |
| Co. Ex. 2 | 1.0000 | 0.9968 | 0.9876 | 0.9637 | 0.9455 | 0.9353 | 0.9169 | 0.9065 | 0.8860 | 0.8773 | 0.8616 | 0.8429 | 0.8382 |

From the data shown in Tables 1-6 and Figures 1 and 2, it can be concluded the lithium-ion rechargeable batteries prepared by the method of the present invention exhibit consistently enhanced performance, including battery capacity, high-temperature storage ability, low-temperature discharge property, and cycle property.

## Claims

1. A method for preparing lithium-ion rechargeable batteries, comprising:

placing an electrode assembly into a battery case and injecting electrolyte solution into the case; and sealing the battery case;
wherein the injection of the electrolyte solution comprises twice electrolyte solution injection which includes a first injection injecting part of the electrolyte solution into the battery case, and then temporarily sealing the case followed by a formation process of the resulted temporarily sealed battery, forming a solid electrolyte interphase (SEI) membrane;
and a second injection injecting the mixture obtained by adding an additive into the remaining electrolyte solution into the battery case
wherein said additive is lithium bis(oxalate)borate.

2. The method of claim 1, wherein the amount of said part of the electrolyte solution is 40-90wt% and the amount of said remaining electrolyte solution is 10-60wt%, based on the total weight of the electrolyte solution.

3. The method of claim 2, wherein the amount of said part of the electrolyte solution is 50-70wt% and the amount of said remaining electrolyte solution is 30-50wt%, based on the total weight of the electrolyte solution.

4. The method of claim 1, wherein the amount of the additive is 0.1-3.0wt% of the total weight of the electrolyte solution.

5. The method of claim 1, wherein the formation process comprising charging the temporarily sealed battery with current 55-220 mA for 6-10 hours so that the voltage of the battery reaches 3.5-4.0 V.

6. The method of claim 1, wherein the electrolyte of said electrolyte solution is one or more selected from the group consisting of lithium hexafluorophosphate, lithium perchlorate, lithium tetrafluoroborate, lithium hexafluoroarsenate, lithium hexafluorosilicate, lithium tetraphenylborate, lithium chloride, lithium bromide, lithium aluminum tetrachloride, lithium tri(trifluoromethylsulfonyl)methene, lithium trifluoromethylsulfonate, and lithium bis(trifluoromethylsulfonyl)imide.

7. The method of claim 1, wherein the solvent of said electrolyte solution is one or more selected from the group consisting of ethylene carbonate, diethyl carbonate, dimethyl carbonate, methyl ethyl carbonate, propylene carbonate, methyl formate, methyl acrylate, methyl butyrate, ethyl acetate, ethylene sulfite, propylene sulfite, dimethyl sulfide, diethyl sulfite, and tetrahydrofuran.

8. The method of claim 1, wherein said electrolyte solution contains 0.5-2 mol/L of the said electrolyte.

## Patentansprüche

1. Verfahren zur Herstellung von wiederaufladbaren Lithium-Ionen-Batterien, umfassend:

Anordnen einer Elektrodenanordnung in einem Batteriegehäuse und Einspritzen einer Elektrolytlösung in das Gehäuse; und
Abdichten des Batteriegehäuses;
wobei das Einspritzen der Elektrolytlösung das zweimalige Einspritzen einer Elektrolytlösung umfasst, die das Einspritzen eines ersten Einspritzteils der Elektrolytlösung in das Batteriegehäuse und dann das vorübergehende Abdichten des Gehäuses, gefolgt von einem Prozess, bei dem die vorübergehend abgedichtete Batterie gebildet wird, Bilden einer festen Elektrolyt-Grenzflächen (SEI)-Membran;
und das Einspritzen einer zweiten Einspritzmischung, der durch Zugabe eines Additivs zu der verbleibenden Elektrolytlösung erhalten wird, in das Batteriegehäuse einschliesst,
wobei das Additiv Lithiumbis(oxalat)borat ist.

**2.** Verfahren gemäss Anspruch 1, wobei die Menge des Elektrolytlösungsteils 40 bis 90 Gew.% und die Menge der verbleibenden Elektrolytlösung 10 bis 60 Gew.%, bezogen auf das Gesamtgewicht der Elektrolytlösung, beträgt.

**3.** Verfahren gemäss Anspruch 2, wobei die Menge des Elektrolytlösungsteils 50 bis 70 Gew.% und die Menge der verbleibenden Elektrolytlösung 30 bis 50 Gew.%, bezogen auf das Gesamtgewicht der Elektrolytlösung, beträgt.

**4.** Verfahren gemäss Anspruch 1, wobei die Menge des Additivs 0,1 bis 3,0 Gew.%, bezogen auf das Gesamtgewicht der Elektrolytlösung, beträgt.

**5.** Verfahren gemäss Anspruch 1, wobei der Bildungsprozess das Aufladen der vorübergehend abgedichteten Batterie mit 55 bis 220 mA Strom für 6 bis 10 Stunden umfasst, so dass die Spannung der Batterie 3,5 bis 4,0 V erreicht.

**6.** Verfahren gemäss Anspruch 1, wobei der Elektrolyt der Elektrolytlösung einer oder mehrere, ausgewählt aus der Gruppe bestehend aus Lithiumhexafluorphosphat, Lithiumperchlorat, Lithiumtetrafluorborat, Lithiumhexafluorarsenat, Lithiumhexafluorsilicat, Lithiumtetraphenylborat, Lithiumchlorid, Lithiumbromid, Lithiumaluminiumtetrachlord, Lithiumtri(trifluormethylsulfonyl)methen, Lithiumtrifluormethylsulfonat und Lithiumbis(trifluormethylsulfonyl)imid, ist.

**7.** Verfahren gemäss Anspruch 1, wobei das Lösungsmittel der Elektrolytlösung eines oder mehrere, ausgewählt aus der Gruppe bestehend aus Ethylencarbonat, Diethylcarbonat, Dimethylcarbonat, Methylethylcarbonat, Propylencarbonat, Methylformiat, Methylacrylat, Methylbutyrat, Ethylacetat, Ethylensulfit, Propylensulfit, Dimethylsulfid, Diethylsulfit und Tetrahydrofuran, ist.

**8.** Verfahren gemäss Anspruch 1, wobei die Elektrolytlösung 0,5 bis 2 mol/l des Elektrolyten enthält.

**Revendications**

**1.** Procédé de préparation de batteries rechargeables au lithium-ion, comprenant le fait :

de placer un ensemble d'électrodes dans un boîtier de batterie et d'injecter une solution d'électrolyte dans le boîtier ; et
de sceller le boîtier de batterie ;
dans lequel l'injection de la solution d'électrolyte comprend une injection de solution d'électrolyte en deux fois qui comporte une première injection qui consiste à injecter une partie de la solution d'électrolyte dans le boîtier de batterie, et à sceller ensuite temporairement le boîtier suivi par un processus de formation de la batterie temporairement scellée résultante, formant une membrane d'interphase d'électrolyte solide (SEI).
et une deuxième injection qui consiste à injecter le mélange obtenu par ajout d'un additif dans la solution d'électrolyte restante dans le boîtier de batterie.
dans lequel ledit additif est du bis(oxalato)borate de lithium.

**2.** Procédé de la revendication 1, dans lequel la quantité de ladite partie de la solution d'électrolyte est de 40 à 90% en poids et la quantité de ladite solution d'électrolyte restante est de 10 à 60% en poids, sur la base du poids total de la solution d'électrolyte.

**3.** Procédé de la revendication 2, dans lequel la quantité de ladite partie de la solution d'électrolyte est de 50 à 70% en poids et la quantité de ladite solution d'électrolyte restante est de 30 à 50% en poids, sur la base du poids total de la solution d'électrolyte.

**4.** Procédé de la revendication 1, dans lequel la quantité de l'additif est de 0,1 à 3,0% en poids du poids total de la solution d'électrolyte.

**5.** Procédé de la revendication 1, dans lequel le processus de formation comprenant le fait de charger la batterie temporairement scellée avec un courant de 55 à 220 mA pendant 6 à 10 heures de sorte que la tension de la batterie atteigne 3,5 à 4,0 V.

**6.** Procédé de la revendication 1, dans lequel l'électrolyte de ladite solution d'électrolyte est un ou plusieurs élément(s) choisi(s) dans le groupe constitué d'hexafluorophosphate de lithium, de perchlorate de lithium, de tétrafluoroborate de lithium, d'hexafluoroarsénate de lithium, d'hexafluorosilicate de lithium, de tétraphénylborate de lithium, de chlorure de lithium, de bromure de lithium, de tétrachlorure de lithium-aluminium, de tri(trifluorométhylsulfonyl)méthène de lithium, de trifluorométhylsulfonate de lithium et de bis(trifluorométhylsulfonyl)imide de lithium.

7. Procédé de la revendication 1, dans lequel le solvant de ladite solution d'électrolyte est un ou plusieurs élément(s) choisi(s) dans le groupe constitué de carbonate d'éthylène, de carbonate de diéthyle, de carbonate de diméthyle, de carbonate de méthyléthyle, de carbonate de propylène, de formiate de méthyle, d'acrylate de méthyle, de butyrate de méthyle, d'acétate d'éthyle, de sulfite d'éthylène, de sulfite de propylène, de sulfure de diméthyle, de sulfite de diéthyle, et de tétrahydrofuranne.

8. Procédé de la revendication 1, dans lequel ladite solution d'électrolyte contient de 0,5 à 2 mol/L dudit électrolyte.

Fig 1

Fig 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005026044 A
- JP 2006040896 B

- JP 2007207650 A